# EUROPEAN PATENT APPLICATION

(11) **EP 4 124 924 A1**
(43) Date of publication of application: **01.02.2023**
(21) Application number: 22187897.8
(22) Date of filing: 29.07.2022
(51) Int. Cl.: G05B 23/02

(54) **CULTIVATION ASSISTANCE SYSTEM, CULTIVATION ASSISTANCE METHOD, PROGRAM, AND RECORDING MEDIUM**

(30) Priority: 30.07.2021 JP 2021124987
(71) Applicant: Yokogawa Electric Corporation, Musashino-shi, Tokyo 180-8750 (JP)
(72) Inventor: Hatsugai, Emiko, Musashino-shi, Tokyo (JP); Saitou, Fumiyasu, Musashino-shi, Tokyo (JP)
(74) Representative: Grünecker Patent- und Rechtsanwälte PartG mbB

(57) **Abstract**

Provided is a cultivation assistance system including a cultivation condition acquisition unit configured to acquire a cultivation condition under which a plant is cultivated, a trouble acquisition unit configured to acquire a trouble occurrence situation in cultivation of the plant, a model generation unit configured to generate, by using the cultivation condition and the trouble occurrence situation, a model for predicting one of a cultivation condition or a trouble from the other, and an estimation unit configured to estimate, by using the model, a cultivation condition for suppressing occurrence of a trouble in cultivation of the plant. The cultivation assistance system includes a preprocessing unit to perform preprocessing on data of at least one of the cultivation condition or the trouble occurrence situation. The model generation unit is to generate, by using the preprocessed data, a model for predicting one of the cultivation condition or the trouble from the other.

## Description

### BACKGROUND

### 1. TECHNICAL FIELD

The present invention relates to a cultivation assistance system, a cultivation assistance method, a program, and a recording medium.

### 2. RELATED ART

Patent Document 1 describes that "there is provided a composition effective in supplying boron to plants, in particular, vegetables", and Patent Document 2 describes "an agricultural/horticultural plant-growing aid in which a stability constant for Ca ions is 2 to 12, and a biodegradability by a Ministry of International Trade and Industry (MITI) method is 10 to 99.9% in TOC (total organic carbon) in 28 days".

### CITATION LIST

### PATENT DOCUMENT

Patent Document 1: Japanese Patent Application Publication No. 2016-8162
Patent Document 2: Japanese Patent Application Publication No. 11-029415

### SUMMARY OF INVENTION

In a first aspect of the present invention, a cultivation assistance system is provided. The cultivation assistance system may include a cultivation condition acquisition unit configured to acquire a cultivation condition under which a plant is cultivated. The cultivation assistance system may include a trouble acquisition unit configured to acquire a trouble occurrence situation in cultivation of the plant. The cultivation assistance system may include a model generation unit configured to generate, by using the cultivation condition and the trouble occurrence situation, a model for predicting one of a cultivation condition or a trouble from the other. The cultivation assistance system may include an estimation unit configured to estimate, by using the model, a cultivation condition for suppressing occurrence of a trouble in cultivation of the plant.

The cultivation assistance system may include a preprocessing unit configured to perform preprocessing on data of at least one of the cultivation condition or the trouble occurrence situation. The model generation unit may be configured to generate, by using the preprocessed data, a model for predicting one of the cultivation condition or the trouble from the other.

The preprocessing unit may be configured to perform the preprocessing including at least one of associating the data of the cultivation condition with the data of the trouble occurrence situation on a time axis, complementing data of at least one of the cultivation condition or the trouble occurrence situation, processing an outlier of data of at least one of the cultivation condition or the trouble occurrence situation, or performing rounding processing of data of at least one of the cultivation condition or the trouble occurrence situation.

The cultivation assistance system may include an extraction unit configured to extract a feature amount of data of at least one of the cultivation condition or the trouble occurrence situation. The model generation unit may be configured to generate the model based on the feature amount.

The extraction unit may be configured to extract, as the feature amount, at least one of an integrated value, a differential value, or data obtained by dissociating a daytime component and a nighttime component with respect to data of at least one of the cultivation condition or the trouble occurrence situation.

The model generation unit may be configured to generate a model of a Bayesian network model structure.

The model generation unit may be configured to cluster data of at least one of the cultivation condition or the trouble occurrence situation and generate the model of the Bayesian network model structure.

The model generation unit may be configured to generate the model of the Bayesian network model structure having a node of data of at least one of the cultivation condition or the trouble occurrence situation.

The cultivation condition acquisition unit may be configured to acquire, as the cultivation condition, plant data indicating an environmental condition under which the plant is cultivated and a state of the cultivated plant.

The cultivation assistance system may include an output unit configured to output data indicating the estimated cultivation condition to a display apparatus.

In a second aspect of the present invention, a cultivation assistance system is provided. The cultivation assistance system may include an estimation unit configured to estimate, by using a model for predicting one of a cultivation condition under which a plant is cultivated or a trouble in cultivation of the plant from the other, a cultivation condition for suppressing occurrence of a trouble in cultivation of the plant. The cultivation assistance system may include an output unit configured to output data indicating the estimated cultivation condition.

The cultivation assistance system may include a cultivation condition acquisition unit configured to acquire the cultivation condition. The cultivation assistance system may include a trouble acquisition unit configured to acquire the trouble occurrence situation. The cultivation assistance system may include a model update unit configured to update the model by using the cultivation condition and the trouble occurrence situation.

In a third aspect of the present invention, a cultivation assistance method is provided. The cultivation assistance method may include acquiring a cultivation condition under which a plant is cultivated. The cultivation assistance method may include acquiring a trouble occurrence situation in cultivation of the plant. The cultivation assistance method may include generating, by using the cultivation condition and the trouble occurrence situation, a model for predicting one of a cultivation condition or a trouble from the other. The cultivation assistance method may include estimating a cultivation condition for suppressing occurrence of a trouble in cultivation of the plant by using the model.

In a fourth aspect of the present invention, a program is provided. The program may cause a computer to function as a cultivation condition acquisition unit configured to acquire a cultivation condition under which a plant is cultivated. The program may cause a computer to function as a trouble acquisition unit configured to acquire a trouble occurrence situation in cultivation of the plant. The program may cause a computer to function as a model generation unit configured to generate, by using the cultivation condition and the trouble occurrence situation, a model for predicting one of a cultivation condition or a trouble from the other. The program may cause a computer to function as an estimation unit configured to estimate, by using the model, a cultivation condition for suppressing occurrence of a trouble in cultivation of the plant.

The summary clause does not necessarily describe all necessary features of the embodiments of the present invention. The present invention may also be a sub-combination of the features described above.

### BRIEF DESCRIPTION OF THE DRAWINGS

Fig. 1 illustrates a configuration of a cultivation assistance system 10 according to the present embodiment.
Fig. 2 is a flow illustrating an example of an operation of the cultivation assistance system 10.
Fig. 3 is a table illustrating data after clustering in a model generation unit 236 of the cultivation assistance system 10 of the present embodiment.
Fig. 4 illustrates temperature data processed in an extraction unit 234.
Fig. 5 illustrates an example of a model of a Bayesian network model structure generated by the model generation unit 236 of the cultivation assistance system 10 of the present embodiment.
Fig. 6 illustrates an example of a display screen to be displayed on a display apparatus 300 of the cultivation assistance system 10 of the present embodiment.
Fig. 7 illustrates an example of a display screen of environmental conditions to be displayed on the display apparatus 300 of the cultivation assistance system 10 of the present embodiment.
Fig. 8 illustrates an example of a display screen of plant data 224 to be displayed on the display apparatus 300 of the cultivation assistance system 10 of the present embodiment.
Fig. 9 illustrates a configuration of another example of the cultivation assistance system 10 according to the present embodiment.
Fig. 10 illustrates an example of a computer 2200 in which a plurality of aspects of the present invention may be embodied in whole or in part.

### DESCRIPTION OF EXEMPLARY EMBODIMENTS

Hereinafter, the present invention will be described through embodiments of the invention, but the following embodiments do not limit the invention according to the claims. In addition, not all of the combinations of features described in the embodiments are essential for means to solve the problem in the invention.

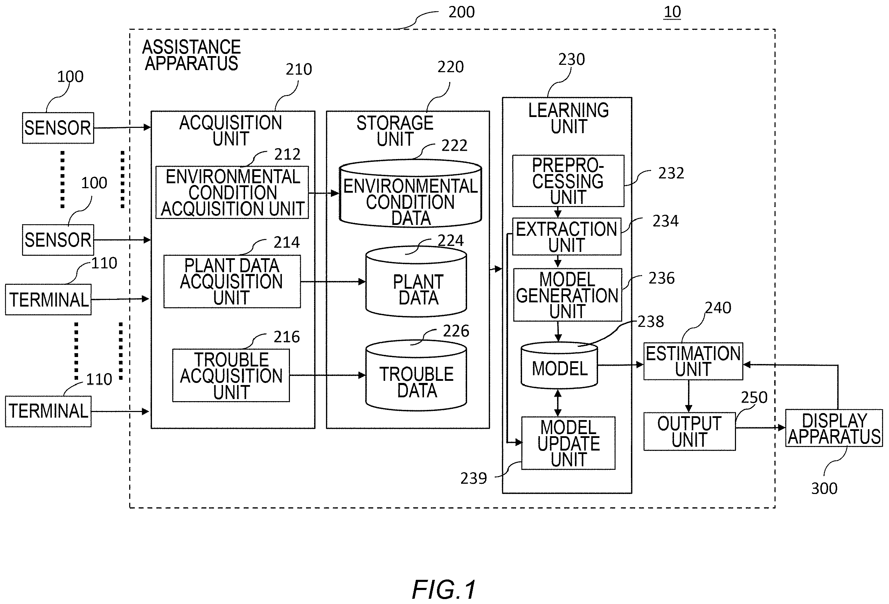

Fig. 1 illustrates a configuration of a cultivation assistance system 10 according to the present embodiment. The cultivation assistance system 10 can estimate a cultivation condition for suppressing the occurrence of a trouble in a plant cultivation. For example, the cultivation assistance system 10 can estimate an appropriate cultivation condition for a plant of a new variety and present the cultivation condition to a customer or the like that performs a cultivation. The cultivation assistance system 10 includes a plurality of sensors 100, a plurality of terminals 110, an assistance apparatus 200, and a display apparatus 300.

The plurality of sensors 100 is connected to the assistance apparatus 200 in a wired or wireless manner, detects at least one of a cultivation condition or a trouble occurrence situation in a plant cultivation, and supplies sensor data to the assistance apparatus 200. The plurality of sensors 100 may be installed in the surrounding environment (for example, a polytunnel for cultivation, a culture medium, or the like) of the plant being cultivated or in the plant (for example, a leaf, a stem, or the like) being cultivated. Each of the plurality of sensors 100 may detect at least one of environmental condition data 222 indicating the environmental condition under which the plant is cultivated or plant data 224 indicating the state of the cultivated plant. The plurality of sensors 100 may automatically detect the occurrence of a trouble and supply trouble data 226 indicating the detected trouble in the assistance apparatus.

Here, the environmental condition may include at least one of a temperature, a humidity, a water amount, and a solar radiation amount of the surrounding environment of the cultivated plant, a culture medium temperature, an electrical conductivity (EC) of the culture medium, a hydrogen ion index (pH) of the culture medium, a carbon dioxide concentration, a type of a chemical used for cultivation, or an amount of the chemical. Furthermore, the plant data 224 may include at least one of a sap flow, a leaf surface temperature, or a stem diameter of the cultivated plant. Note that the environmental condition and the plant data 224 are included in the cultivation condition, and hereinafter, the cultivation condition indicates at least one of the environmental condition or the plant data 224. Furthermore, the trouble in the plant cultivation may include at least one of a physiological trouble such as a blossom-end rot and a fissure, a trouble caused by a disease, or a trouble caused by a pest. The trouble data 226 may include at least one of a type, a frequency, or a range of the trouble.

The plurality of terminals 110 may be computers such as a personal computer (PC), a tablet computer, a smartphone, a workstation, a server computer, or a general-purpose computer that are connected to the assistance apparatus 200 in a wired or wireless manner and owned by a cultivator or the like that performs a cultivation, or may be a computer system to which a plurality of computers is connected. The terminal 110 may receive an input of at least one of the cultivation condition or the trouble occurrence situation in the plant cultivation from the cultivator and transmit the input data to the assistance apparatus 200. The terminal 110 may receive an input of the trouble data 226 from the cultivator. The terminal 110 may receive data indicating a cultivation condition set in cultivation from the cultivator.

The assistance apparatus 200 is connected to the display apparatus 300. The assistance apparatus 200 generates a model by performing learning using the data indicating the cultivation condition and the trouble occurrence situation obtained as a result of a test cultivation or the like. Further, the assistance apparatus 200 estimates an appropriate cultivation condition for each type of plant by using the model and outputs the cultivation condition to the display apparatus 300.

The assistance apparatus 200 may be a computer such as a personal computer (PC), a tablet computer, a smartphone, a workstation, a server computer, or a general-purpose computer, or may be a computer system in which a plurality of computers is connected. Such a computer system is also a computer in a broad sense. Furthermore, the assistance apparatus 200 may be implemented by one or more virtual computer environments executable in a computer. Alternatively, the assistance apparatus 200 may be a dedicated computer designed for cultivation assistance or may be dedicated hardware realized by a dedicated circuit. In the case of using a computer, the assistance apparatus 200 is realized by executing a program by the computer.

The assistance apparatus 200 includes an acquisition unit 210, a storage unit 220, a learning unit 230, an estimation unit 240, and an output unit 250. The acquisition unit 210 is connected to the plurality of sensors 100 and terminals 110, and acquires data for learning. The acquisition unit 210 includes an environmental condition acquisition unit 212, a plant data acquisition unit 214, and a trouble acquisition unit 216. Note that the environmental condition acquisition unit 212 and the plant data acquisition unit 214 are examples of a cultivation condition acquisition unit of the present application.

The environmental condition acquisition unit 212 is connected to the storage unit 220, acquires the environmental condition data 222 indicating the environmental condition under which the plant is cultivated, and supplies the acquired data to the storage unit 220. The environmental condition acquisition unit 212 may acquire the environmental condition data 222 from the plurality of sensors 100 and terminals 110. The environmental condition acquisition unit 212 may acquire the environmental condition data 222 input from a user of the assistance apparatus 200.

The plant data acquisition unit 214 is connected to the storage unit 220, acquires the plant data 224 indicating the state of the cultivated plant, and supplies the acquired data to the storage unit 220. The plant data acquisition unit 214 may acquire the plant data 224 from the plurality of sensors 100 and terminals 110. The plant data acquisition unit 214 may acquire the plant data 224 input from the user of the assistance apparatus 200.

The trouble acquisition unit 216 is connected to the storage unit 220, acquires the trouble data 226 indicating the trouble occurrence situation in the plant cultivation, and supplies the acquired data to the storage unit 220. The trouble acquisition unit 216 may acquire the trouble data 226 from the plurality of sensors 100 and terminals 110. The trouble acquisition unit 216 may acquire the trouble data 226 input from the user of the assistance apparatus 200.

The storage unit 220 is connected to the learning unit 230 and stores the environmental condition data 222, the plant data 224, and the trouble data 226 that are acquired by the acquisition unit 210. Then, the storage unit 220 supplies the environmental condition data 222, the plant data 224, and the trouble data 226 as data for learning to the learning unit 230.

The learning unit 230 is connected to the estimation unit 240, and generates and updates, by using the data for learning supplied from the storage unit 220, a model for predicting one of the cultivation condition or the trouble from the other. The learning unit 230 includes a preprocessing unit 232, an extraction unit 234, a model generation unit 236, and a model update unit 239.

The preprocessing unit 232 is connected to the extraction unit 234, performs preprocessing on data of at least one of the cultivation condition or the trouble occurrence situation supplied from the storage unit 220, and supplies the preprocessed data to the extraction unit 234. The preprocessing unit 232 may perform preprocessing for learning on data.

The extraction unit 234 is connected to the model generation unit 236 and the model update unit 239, and extracts a feature amount of data of at least one of the cultivation condition or the trouble occurrence situation. The extraction unit 234 may extract a feature amount of the data preprocessed by the preprocessing unit 232 and supply the extracted feature amount to the model generation unit 236 and the model update unit 239.

The model generation unit 236 generates, by using the cultivation condition and the trouble occurrence situation, a model 238 for predicting one of the cultivation condition or the trouble from the other, and stores the generated model in the learning unit 230. The model generation unit 236 may generate the model 238 by using at least one of the data stored in the storage unit 220, the preprocessed data, or the extracted feature amount.

The model update unit 239 updates the model 238 by using the cultivation condition and the trouble occurrence situation. The model update unit 239 may update the model by using at least one of the data stored in the storage unit 220, the preprocessed data, or the extracted feature amount. The model update unit 239 may update the model 238 by using the data acquired by the acquisition unit 210 after the model generation unit 236 generates the model 238. The model update unit 239 may update the model 238 by using data of the plant cultivation executed under the cultivation condition estimated by the model 238.

The estimation unit 240 is connected to the output unit 250 and the display apparatus 300, estimates, by using the model 238 stored in the learning unit 230, a cultivation condition for suppressing the occurrence of a trouble in the plant cultivation, and supplies the estimated cultivation condition to the output unit 250. The estimation unit 240 may estimate, by using the model 238, a combination of the cultivation conditions that can most suppress the occurrence of a trouble. Furthermore, the estimation unit 240 may estimate the cultivation condition in response to an input of an estimation condition from the user of the display apparatus 300 or the assistance apparatus 200. The estimation unit 240 may estimate a plurality of combinations of cultivation conditions.

The output unit 250 is connected to the display apparatus 300, and outputs data indicating the cultivation condition estimated by the estimation unit 240 to the display apparatus 300.

The display apparatus 300 may be a display such as a computer or a touch panel display. The display apparatus 300 may display the cultivation condition on a display screen according to the data received from the output unit 250. The display apparatus 300 may receive the input of the estimation condition from the user and transmit data indicating the estimation condition to the estimation unit 240 of the assistance apparatus 200. Note that the display apparatus 300 may be a part of the assistance apparatus 200.

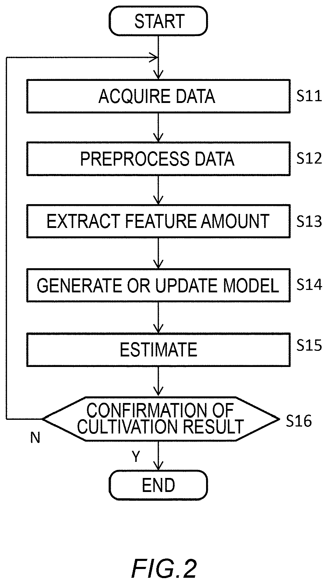

Fig. 2 is a flow illustrating an example of an operation of the cultivation assistance system 10. In S11, the acquisition unit 210 acquires the cultivation condition and the trouble occurrence situation in the plant cultivation. The environmental condition acquisition unit 212 may acquire the environmental condition data 222 from the plurality of sensors 100 and terminals 110 in real time or periodically. The environmental condition acquisition unit 212 may store the acquired environmental condition data 222 in the storage unit 220 in association with at least one of a plant type or acquisition date and time. The plant data acquisition unit 214 may acquire the plant data 224 from the plurality of sensors 100 and terminals 110 in real time or periodically. The plant data acquisition unit 214 may store the acquired plant data 224 in the storage unit 220 in association with at least one of the plant type or the acquisition date and time. The trouble acquisition unit 216 may acquire, via the terminal 110, data obtained by the cultivator labeling the plant in a visual manner or the like.

The trouble acquisition unit 216 may acquire the trouble occurrence situation detected by the sensor 100 by image diagnosis or the like. The trouble acquisition unit 216 may generate a model for outputting the trouble occurrence situation from an image by performing learning using learning data labeled in advance by the cultivator or the like. The trouble acquisition unit 216 may perform the image diagnosis by using the model for trouble detection. The trouble acquisition unit 216 stores the acquired trouble data 226 in the storage unit 220.

In S12, the preprocessing unit 232 performs preprocessing on the environmental condition data 222, the plant data 224, and the trouble data 226. The preprocessing unit 232 may perform preprocessing including at least one of associating the data of the cultivation condition with the data of the trouble occurrence situation on a time axis, complementing data of at least one of the cultivation condition or the trouble occurrence situation, processing an outlier of data of at least one of the cultivation condition or the trouble occurrence situation, or performing rounding processing of data of at least one of the cultivation condition or the trouble occurrence situation.

The preprocessing unit 232 may associate the environmental condition data 222, the plant data 224, and the trouble data 226 in accordance with a data acquisition time. As an example, the preprocessing unit 232 may associate the environmental condition data 222, the plant data 224, and the trouble data 226 with every same acquisition date or every same time interval on different acquisition dates or the same acquisition date according to the data acquisition time.

The preprocessing unit 232 may complement data by using a complement algorithm such as linear interpolation or spline complement for a period in which data does not exist. When a difference of data from the average value of the data exceeds a threshold predetermined by the user, the preprocessing unit 232 may delete the data as the outlier or change the data into the same value as the preceding and subsequent data on the time axis. The preprocessing unit 232 may perform rounding processing, for example, by rounding down the data to the nearest whole number. The preprocessing unit 232 may perform discretization for clustering on the data.

In S13, the extraction unit 234 extracts feature amounts of the environmental condition data 222, the plant data 224, and the trouble data 226. The extraction unit 234 may extract, as the feature amount, at least one of an integrated value, a differential value, or data obtained by dissociating a daytime component and a nighttime component with respect to data of at least one of the environmental condition data 222, the plant data 224, or the trouble data 226. The extraction unit 234 may calculate, as the feature amount, an integrated value of the data for each predetermined period. As an example, the extraction unit 234 may extract, as the feature amount, an integrated value of the number of occurrences of troubles, a temperature, a humidity, or the like every three hours. In this way, by calculating the integrated value, a delayed influence can be known. The extraction unit 234 may calculate a differential value of the data in a plurality of acquisition times and extract the differential value as the feature amount. The extraction unit 234 may regard the data changing on the time axis as a composite wave of the daytime component and the nighttime component and may dissociate one of the daytime component or the nighttime component by complementation (for example, spline complement) or a frequency decomposition method (for example, Fourier transform or the like). Then, the extraction unit 234 may dissociate a difference between one of the daytime component or the nighttime component dissociated and the sensor data as the other of the daytime component and the nighttime component.

In S14, the model generation unit 236 generates a model by performing machine learning using the preprocessed data and the feature amount. The model generation unit 236 may cluster data of at least one of the cultivation condition or the trouble occurrence situation. The model generation unit 236 may cluster the data based on at least one of time series or a similarity of the feature amount or the like. As an example, the model generation unit 236 may set data in the same time zone of different acquisition dates to the same cluster. Furthermore, the model generation unit 236 may set data in which a similarity of vectorized data is greater than a threshold (for example, a distance is smaller than a threshold) to the same cluster. As an example, the model generation unit 236 may set corresponding data in which a difference between the extracted feature amounts is equal to or less than a threshold to the same cluster.

The model generation unit 236 may generate the model 238 of a Bayesian network model structure. After the clustering, the model generation unit 236 may generate a model of the Bayesian network model structure having a node of data of at least one of the cultivation condition or the trouble occurrence situation. The model generation unit 236 stores the generated model 238 in the learning unit 230. Furthermore, the model generation unit 236 may generate a machine learning model other than the Bayesian network model structure.

In S14, when the model 238 has already been stored in the learning unit 230, the model update unit 239 updates the model 238 by using the preprocessed data and the feature amount. The model update unit 239 may perform machine learning similarly to the model generation unit 236 and update the model of the Bayesian network model structure.

In S15, the estimation unit 240 estimates, by using the model 238, a cultivation condition for suppressing the occurrence of the trouble. The estimation unit 240 may estimate a combination of the cultivation conditions that can most suppress the occurrence of the trouble, or may estimate a plurality of combinations of the cultivation conditions that can suppress the occurrence of the trouble to a threshold or less. When at least one cultivation condition is input from the user, the estimation unit 240 may estimate a combination of cultivation conditions including the input cultivation condition. When at least one combination of cultivation conditions is input from the user, the estimation unit 240 may estimate, by using the model 238, the degree to which the combination of cultivation conditions suppresses the occurrence of the trouble. The estimation unit 240 supplies the estimated result to the output unit 250.

In S16, the output unit 250 may output data indicating the estimation result to the display apparatus 300 and cause the display apparatus 300 to display the estimation result. When the cultivator performs cultivation according to the displayed cultivation condition, and a cultivation result is favorable (Y in Fig. 2), the flow ends. Furthermore, when the cultivator performs cultivation according to the displayed cultivation condition, and a cultivation result is unfavorable (N in Fig. 2), the flow returns to S11, the acquisition unit 210 acquires the unfavorable cultivation result and the cultivation condition, and the model update unit 239 restarts learning with the acquired data. Furthermore, when the cultivator determines not to execute cultivation under the displayed cultivation condition (N in Fig. 2), the cultivation result is regarded to be unfavorable (for example, it is regarded that the number of troubles is large), and the cultivation condition is acquired by the acquisition unit 210. As a result, the updated model 238 can output a different cultivation condition.

The cultivation assistance system 10 of the present embodiment as described above can estimate a cultivation condition suitable for a plant of a new variety or the like by the minimum test cultivation, which contributes to shortening the development period of the new variety. Since a physiological trouble of the plant occurs when the balance of an environment is lost, when an environmental condition under which the physiological trouble does not occur can be clarified, the occurrence of the physiological trouble can be suppressed without using any chemical. Furthermore, a cultivation loss can be reduced by maintaining the environmental condition under which the physiological trouble does not occur, instead of spraying a chemical after the physiological trouble occurs. Therefore, the cultivation assistance system 10 of the present embodiment is particularly suitable for estimating the cultivation condition for suppressing the physiological trouble without using any chemical.

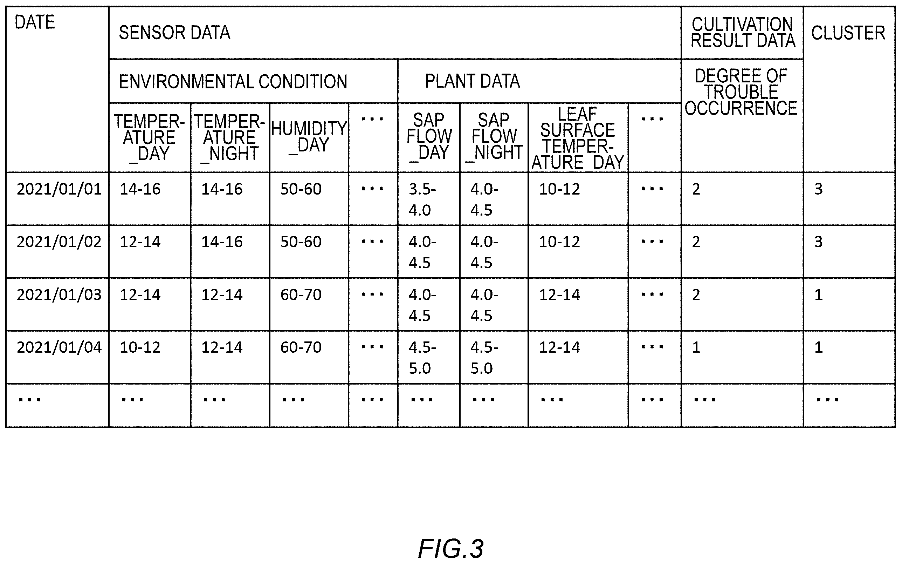

Fig. 3 is a table illustrating data after clustering in the model generation unit 236 of the cultivation assistance system 10 of the present embodiment. In the table, "temperature_day" of the environmental condition indicates a daytime temperature of the cultivation environment, "temperature_night" indicates a nighttime temperature of the cultivation environment, and "humidity day" indicates a daytime humidity of the cultivation environment. In the table, "sap flow day" of the plant data 224 indicates a daytime sap flow of the cultivated plant, "sap flow night" indicates a nighttime sap flow of the cultivated plant, and "leaf surface temperature day" indicates a daytime leaf surface temperature of the cultivated plant. The same applies hereinafter.

A degree of trouble occurrence in Fig. 3 is trouble data 226, and may be obtained by normalizing the number of trouble occurrences in the preprocessing unit 232. As shown in the table, the environmental condition data 222, the plant data 224, and the trouble data 226 are associated according to the date and nighttime/daytime, and belong to clusters of 1 to N (N > 1). In Fig. 3, data on dates 2021/01/01 and 2021/01/02 belong to cluster 3, and data on dates 2021/01/03 and 2021/01/04 belong to cluster 1.

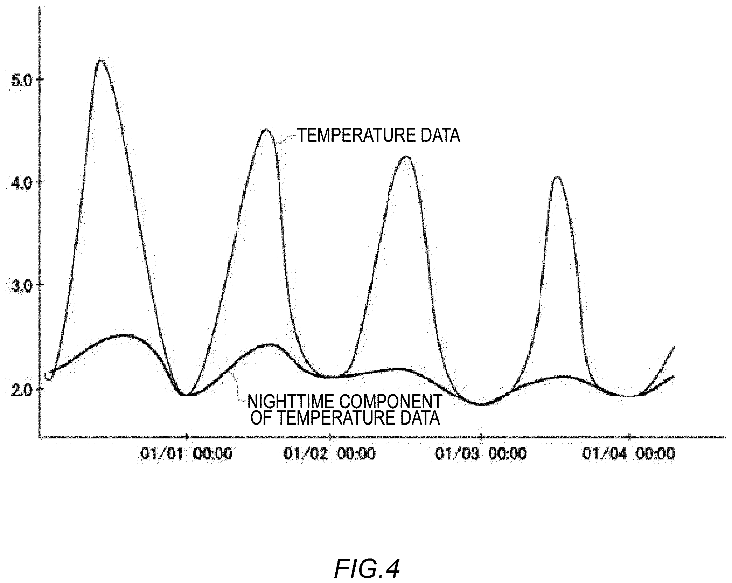

Fig. 4 illustrates temperature data processed in the extraction unit 234. In the graph of Fig. 4, a vertical axis represents a temperature normalized in the preprocessing unit 232, and a horizontal axis represents a time. The environmental condition acquisition unit 212 in the present embodiment may acquire temperature data from the sensor 100. The temperature data changes on the time axis as illustrated in Fig. 4 and has a wave-like shape. The extraction unit 234 processes the wave of the temperature data as a composite wave of a nighttime component and a daytime component. The extraction unit 234 may use temperature data of predetermined nighttime time periods (for example, 23:00 to 2:00) in a plurality of days to complement (for example, spline complement or the like) time periods (that is, 2:00 to 23:00) between the temperature data to dissociate the nighttime component as illustrated in Fig. 4.

The extraction unit 234 may frequency-decompose the wave of the temperature data on the time axis by Fourier transform or the like, and convert data of a predetermined frequency band (for example, the nighttime component in a low frequency band, the daytime component in a high frequency band, or the like) into data on the time axis by inverse Fourier transform or the like. The extraction unit 234 may calculate a difference between one data of the calculated daytime component or nighttime component and the temperature data as the other data of the daytime component and the nighttime component. Note that the extraction unit 234 can similarly process the environmental condition data 222, the plant data 224, and the trouble data 226 (for example, data such as a solar radiation amount or a sap amount).

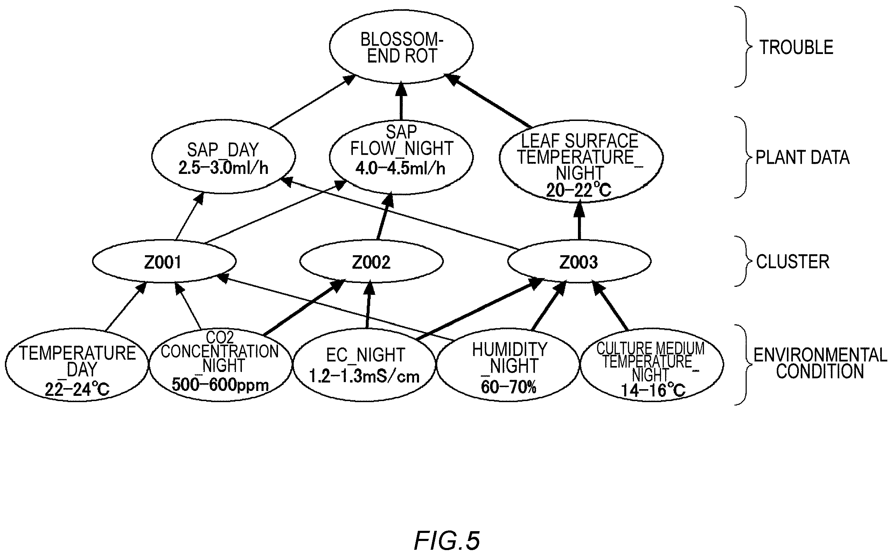

Fig. 5 illustrates an example of a model of a Bayesian network model structure generated by the model generation unit 236 of the cultivation assistance system 10 of the present embodiment. The model generation unit 236 may generate a model including three or more node layers including a node layer of the environmental condition, a node layer of the plant data 224, and a node layer of the trouble. Compared with the environmental condition, the plant data 224 has a greater influence on the occurrence of a physiological trouble such as a blossom-end rot. Therefore, as illustrated in Fig. 5, the model generation unit 236 can generate a model in which a plurality of environmental conditions is set as nodes for a first layer, a plurality of clusters is set as nodes for a second layer, a plurality of plant data 224 is set as nodes for a third layer, and a trouble is set as a node for a fourth layer. In the model of Fig. 5, a thick arrow indicates that a probability of node transition is higher than that of a thin arrow.

In Fig. 5, the model 238 may indicate, in the first layer, a combination of environmental condition ranges in which a blossom-end rot is most unlikely to occur. In the model 238, a probability (ratio) that each of a plurality of nodes of environmental conditions in the first layer belongs to each node of clusters may be indicated by an arrow. The model 238 may indicate a probability of the range of the plant data 224 occurring under a plurality of environmental conditions belonging to each node of clusters by an arrow between the node of the cluster and the node of the plant data 224. The model 238 may indicate a probability of the trouble occurring from each range of the plant data 224 by an arrow between the node of the plant data 224 and the node of the trouble. The model 238 may calculate a total probability between the node of the environmental condition range and the node of the blossom-end rot as the probability of the occurrence of the blossom-end rot under the indicated environmental condition. The model 238 may calculate the total probability by combining arrows in which the occurrence probability is lowest or highest between the plurality of nodes of environmental condition ranges and the node of the blossom-end rot or combining all the arrows and multiplying the probabilities.

Each range of the environmental conditions and each range of the plant data 224 may be obtained when the acquisition unit 210, the preprocessing unit 232, or the model generation unit 236 allocates data to a plurality of ranges defined in advance in a table stored in the assistance apparatus 200. For example, a measurement temperature of 21°C in the daytime is allocated to the range of 22 to 20°C among a plurality of temperature ranges such as 20 to 22°C, 22 to 24°C, 24 to 26°C, or the like.

With the model configuration as illustrated in Fig. 5, the user inputs the environmental condition data 222 to the assistance apparatus 200 during using the model 238, so that it is possible to estimate the probability of the occurrence of the blossom-end rot under the environmental condition of the range to which the input environmental condition data 222 belongs. Therefore, when only the environmental condition data 222 is acquired and stored, the assistance apparatus 200 can estimate the probability of trouble occurrence without actually measuring the plant data 224. The cultivation assistance system 10 may cause the display apparatus 300 to display the model as illustrated in Fig. 5.

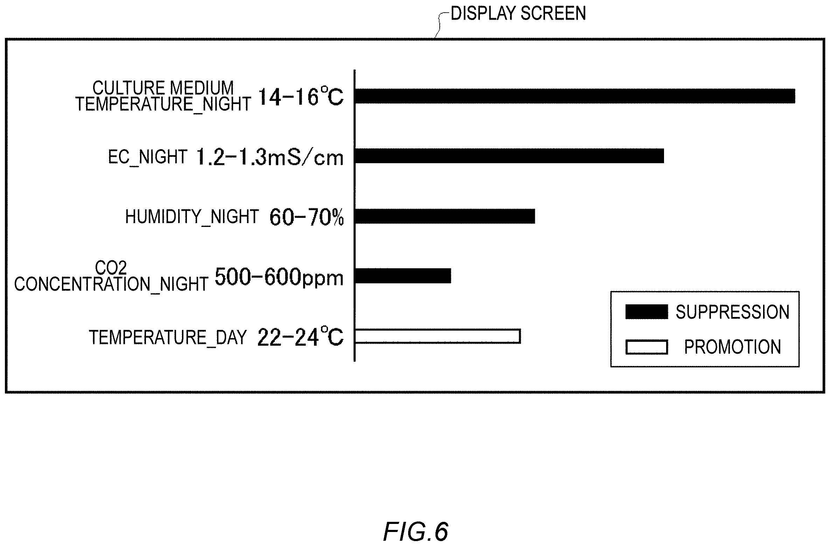

Fig. 6 illustrates an example of a display screen to be displayed on the display apparatus 300 of the cultivation assistance system 10 of the present embodiment. In the display screen of Fig. 6, a vertical axis represents environmental conditions, and a horizontal axis represents a degree of trouble occurrence (black indicates a degree of suppressing the trouble occurrence, and white indicates a degree of promoting the trouble occurrence). As an example, when the user inputs a combination of the environmental conditions on the vertical axis in Fig. 6 to the assistance apparatus 200 or when the acquisition unit 210 of the assistance apparatus 200 acquires a measurement value, the assistance apparatus 200 may automatically estimate the degree of the trouble occurrence in each environmental condition as illustrated in Fig. 6 by using the model 238 and cause the display apparatus 300 to display the estimated degree. As another example, when the user inputs the type of the trouble, the environmental conditions and the plant data may be displayed in descending order of the effect of suppressing the trouble.

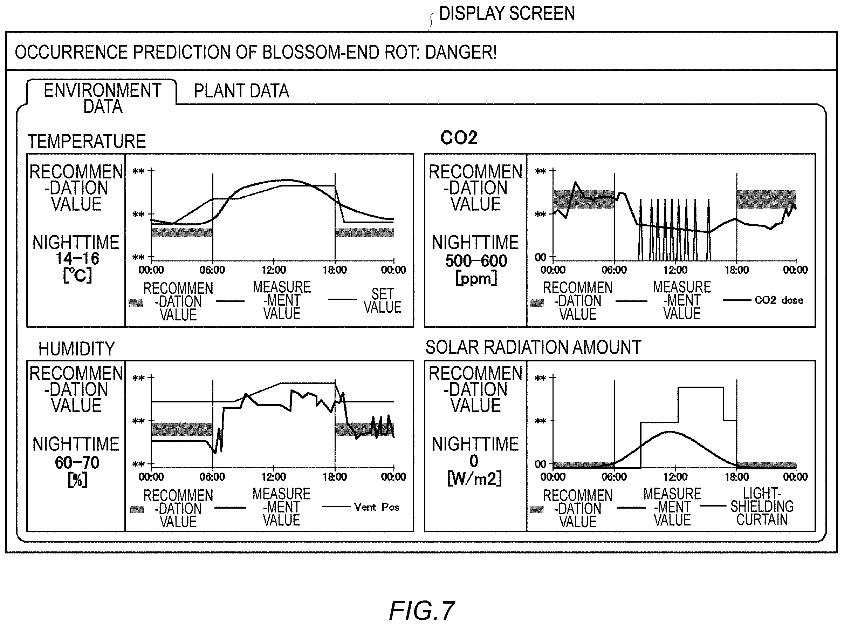

Fig. 7 illustrates an example of a display screen of the environmental conditions displayed on the display apparatus 300 of the cultivation assistance system 10 of the present embodiment. In Fig. 7, in a graph of a temperature, a vertical axis represents the temperature, a horizontal axis represents a time, a set value indicates the set temperature of the cultivation environment by a thin line, a measurement value indicates the actual temperature measured by the sensor 100 by a thick line, and a recommendation value (14 to 16°C) in the nighttime of 18:00 to 6:00 is indicated by a gray range. In a graph of CO₂, a vertical axis represents a CO₂ concentration, a horizontal axis represents the time, a CO₂ dose indicates the amount of carbon dioxide added to the cultivation environment by a thin line, a measurement value indicates an actual CO₂ concentration in the cultivation environment measured by the sensor 100 by a thick line, and a recommendation value (500 to 600 ppm) during the nighttime of 18:00 to 6:00 is indicated in a gray range. In a graph of a humidity, a vertical axis represents the humidity, a horizontal axis represents the time, Vent pos indicates the set humidity of the cultivation environment by a thin line, a measurement value indicates the actual humidity of the cultivation environment measured by the sensor 100 by a thick line, and a recommendation value (60 to 70%) during the nighttime of 18:00 to 6:00 is indicated in a gray range. In a graph of a solar radiation amount, a vertical axis represents the solar radiation amount, a horizontal axis represents the time, a light-shielding curtain indicates a degree of light shielding of the cultivation environment by a thin line, a measurement value indicates the actual solar radiation amount of the cultivation environment measured by the sensor 100 by a thick line, and a recommendation value (0) during the nighttime of 18:00 and 6:00 is indicated by gray.

When the user inputs, to the assistance apparatus 200, an instruction to predict the occurrence of the blossom-end rot in the cultivation of a specific plant, the assistance apparatus 200 estimates, by using the model 238, an environmental condition (recommendation value) for suppressing the blossom-end rot of the plant. The model 238 may output a combination of ranges having the lowest probability of the occurrence of the blossom-end rot in each of a plurality of temperature ranges, a plurality of humidity ranges, a plurality of carbon dioxide concentration ranges, and a plurality of solar radiation amount ranges. Further, the assistance apparatus 200 may acquire the measurement value of the cultivation of the plant, compare the acquired measurement value with the estimated environmental condition, and predict the occurrence of the blossom-end rot according to a degree of coincidence between the measurement value and the environmental condition. Then, as illustrated in Fig. 7, the assistance apparatus 200 may cause the display apparatus 300 to display the measurement value, the recommendation value, and the occurrence prediction ("DANGER!" in Fig. 7 which means that there is a high possibility that the blossom-end rot occurs when the degree of coincidence is lower than a threshold) of the blossom-end rot in the cultivation of the plant.

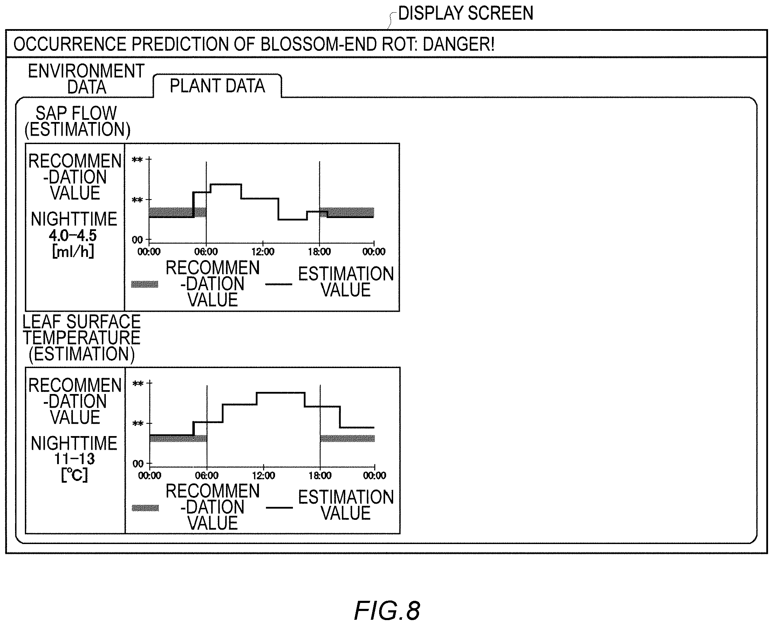

Fig. 8 illustrates an example of a display screen of the plant data 224 to be displayed on the display apparatus 300 of the cultivation assistance system 10 of the present embodiment. The display screen of Fig. 8 may be switchable with respect to the display screen of Fig. 7 by a tab, and the processing for the display of Fig. 7 and the processing for the display of Fig. 8 may be simultaneously performed.

In Fig. 8, graphs of changes in the sap flow and the leaf surface temperature over time are illustrated, and each graph indicates the ranges of the measurement value and the recommendation value of the sensor 100 in one day. In the graph of the sap flow, a vertical axis represents a sap flow rate, a horizontal axis represents the time, an estimation value indicates the sap flow rate based on data, and a recommendation value (4 to 4.5 ml/h) during the nighttime of 18:00 to 6:00 is indicated in a gray range. In the graph of the leaf surface temperature, a vertical axis represents the leaf surface temperature, a horizontal axis represents the time, an estimation value indicates the leaf surface temperature based on data, and a recommendation value (11 to 13°C) during the nighttime of 18:00 to 6:00 is indicated in a gray range.

When the user inputs, to the assistance apparatus 200, the instruction to predict the occurrence of the blossom-end rot in the cultivation of the specific plant or when the acquisition unit 210 of the assistance apparatus 200 acquires the measurement value, the assistance apparatus 200 automatically estimates, by using the model 238, the plant data 224 (recommendation value) for suppressing the blossom-end rot of the plant. By using the model 238, the assistance apparatus 200 may estimate, as the recommendation value, the plant data 224 in which the blossom-end rot can be most suppressed under the recommendation value of the environmental condition in Fig. 7, for example. The assistance apparatus 200 may estimate, by using the model 238, the plant data occurring with the highest probability from the measurement value of the environmental condition and use the plant data as the estimation value in Fig. 8. Then, as illustrated in Fig. 8, the assistance apparatus 200 may cause the display apparatus 300 to display the measurement value, the recommendation value, and the occurrence prediction ("DANGER!" in Fig. 8 which means that there is a high possibility that the blossom-end rot occurs when the degree of coincidence is lower than the threshold) of the blossom-end rot in the cultivation of the plant. Note that the display screens in Figs. 7 and 8 may display the environmental condition and the plant data of each node estimated simultaneously when the model as illustrated in Fig. 5 is generated.

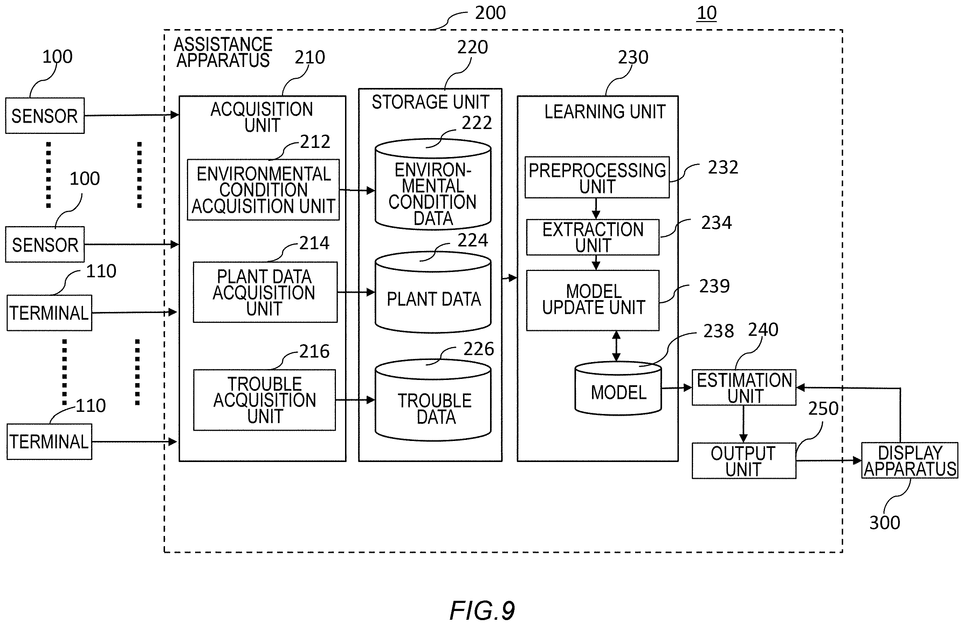

Fig. 9 illustrates a configuration of another example of the cultivation assistance system 10 according to the present embodiment. The cultivation assistance system 10 in another example may have a configuration similar to the cultivation assistance system 10 in Fig. 1 and perform the same operation, but does not include the model generation unit 236. The cultivation assistance system 10 of another example may store the model 238 learned in advance by an external device. The estimation unit 240 of the cultivation assistance system 10 of another example may perform estimation processing by using the model 238 similarly to the estimation unit 240 of the assistance apparatus 200 of Fig. 1. Other configurations and operations of the cultivation assistance system 10 of another example may be similar to those of the cultivation assistance system 10 of Fig. 1, and a detailed description thereof will be omitted.

The cultivation assistance system 10 in Figs. 1 and 9 may not include the sensor 100 and the terminal 110, and the assistance apparatus 200 may acquire data for learning from an external storage device or the like. Furthermore, the cultivation assistance system 10 may include a control device that controls the environmental condition of the plant cultivation. In this case, the control device may execute control in accordance with the cultivation condition estimated by the assistance apparatus 200, and the assistance apparatus 200 may acquire data of the executed cultivation and further perform learning.

Various embodiments of the present invention may also be described with reference to flowcharts and block diagrams, where the blocks may represent (1) a stage of a process in which an operation is performed or (2) a section of a device that is responsible for performing the operation. Specific stages and sections may be implemented by a dedicated circuit, a programmable circuit supplied with a computer-readable instruction stored on a computer-readable medium, and/or a processor supplied with the computer-readable instruction stored on the computer-readable medium. The dedicated circuit may include a digital and/or analog hardware circuit, and may include an integrated circuit (IC) and/or a discrete circuit. The programmable circuit may include a reconfigurable hardware circuit including logical AND, OR, XOR, NAND, NOR, and other logical operations, flip-flops, registers, memory elements, or the like, such as field-programmable gate arrays (FPGA), or programmable logic arrays (PLA).

The computer-readable medium may include any tangible device capable of storing instructions for execution by an appropriate device, so that the computer-readable medium having the instructions stored thereon includes a product including instructions that can be executed to create means for executing the operations designated in the flowcharts or block diagrams. Examples of the computer-readable medium may include an electronic storage medium, a magnetic storage medium, an optical storage medium, an electromagnetic storage medium, a semiconductor storage medium, and the like. More specific examples of the computer-readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-Ray (registered trademark) disk, a memory stick, an integrated circuit card, and the like.

The computer-readable instruction may include: an assembler instruction, an instruction-set-architecture (ISA) instruction; a machine instruction; a machine dependent instruction; a microcode; a firmware instruction; state-setting data; or either a source code or an object code written in any combination of one or more programming languages, including an object oriented programming language such as Smalltalk (registered trademark), JAVA (registered trademark), C++, or the like; and a conventional procedural programming language such as a "C" programming language or a similar programming language.

The computer-readable instruction may be provided for a processor of a general-purpose computer, a special purpose computer, or another programmable data processing apparatus, or a programmable circuit locally or via a local area network (LAN) or a wide area network (WAN) such as the Internet, and the computer-readable instruction may be executed to create means for executing the operations designated in the flowcharts or block diagrams. Examples of the processor include a computer processor, a processing unit, a microprocessor, a digital signal processor, a controller, a microcontroller, and the like.

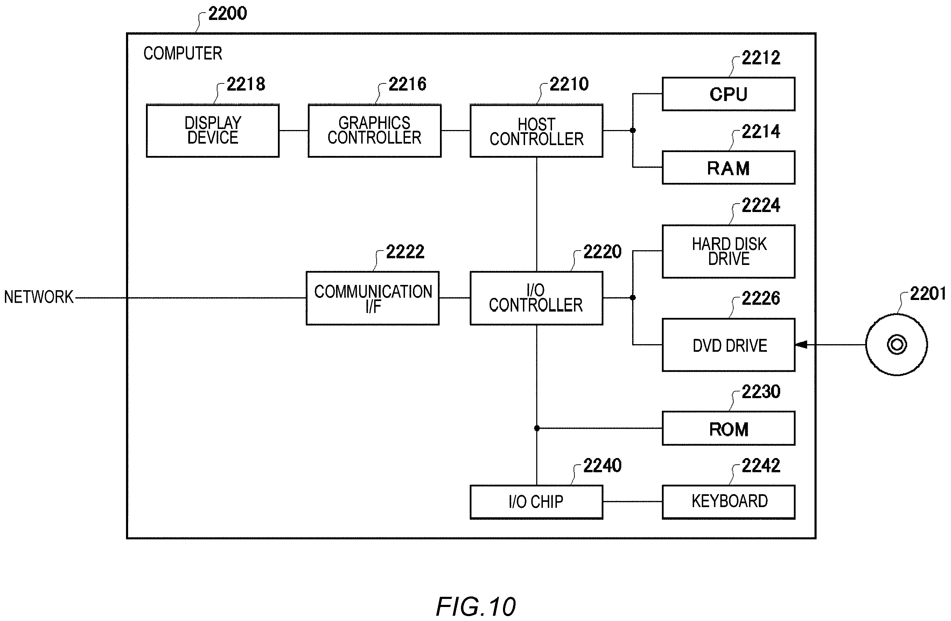

Fig. 10 illustrates an example of a computer 2200 in which a plurality of aspects of the present invention may be embodied in whole or in part. A program installed in the computer 2200 can cause the computer 2200 to function as an operation associated with the device according to the embodiment of the present invention or one or more sections of the device or to execute the operation or the one or more sections, and/or can cause the computer 2200 to execute a process according to the embodiment of the present invention or a stage of the process. Such programs may be executed by a CPU 2212 to cause the computer 2200 to perform specific operations associated with some or all of the blocks in the flowcharts and block diagrams described in the present specification.

The computer 2200 according to the present embodiment includes the CPU 2212, a RAM 2214, a graphic controller 2216, and a display device 2218, which are mutually connected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes as a ROM 2230 and a legacy input/output unit such as a keyboard 2242, which are connected to input/output controller 2220 via an input/output chip 2240.

The CPU 2212 operates according to the programs stored in the ROM 2230 and the RAM 2214, thereby controlling each unit. The graphics controller 2216 acquires the image data generated by the CPU 2212 in a frame buffer or the like provided in the RAM 2214 or itself and causes the image data to be displayed on the display device 2218.

The communication interface 2222 communicates with other electronic devices via a network. The hard disk drive 2224 stores programs and data used by the CPU 2212 in the computer 2200. The DVD-ROM drive 2226 reads a program or data from a DVD-ROM 2201 and provides the program or data to the hard disk drive 2224 via the RAM 2214. The IC card drive reads a program and data from an IC card and/or writes a program and data to the IC card.

The ROM 2230 stores therein a boot program or the like executed by the computer 2200 at the time of activation, and/or a program depending on the hardware of the computer 2200. The input/output chip 2240 may also connect various input/output units to the input/output controller 2220 via a parallel port, a serial port, a keyboard port, a mouse port, or the like.

The program is provided by a computer-readable medium such as the DVD-ROM 2201 or the IC card. The program is read from a computer-readable medium, installed in the hard disk drive 2224, the RAM 2214, or the ROM 2230 which is also an example of the computer-readable medium, and executed by the CPU 2212. The information processing described in these programs is read by the computer 2200 and provides cooperation between the programs and various types of hardware resources. A device or method may be configured by implementing the operation or processing of information according to the use of the computer 2200.

For example, when communication is performed between the computer 2200 and an external device, the CPU 2212 may execute a communication program loaded in the RAM 2214 and instruct the communication interface 2222 to perform communication processing based on the processing described in the communication program. Under the control of the CPU 2212, the communication interface 2222 reads transmission data stored in a transmission buffer processing area provided in a recording medium such as the RAM 2214, the hard disk drive 2224, the DVD-ROM 2201, or the IC card, transmits the read transmission data to the network, or writes reception data received from the network in a reception buffer processing area or the like provided on the recording medium.

The CPU 2212 may cause the RAM 2214 to read all or a necessary portion of a file or database stored in an external recording medium such as the hard disk drive 2224, the DVD-ROM drive 2226 (DVD-ROM 2201), or the IC card and may execute various types of processing on data on the RAM 2214. Next, the CPU 2212 writes back the processed data to the external recording medium.

Various types of information such as various types of programs, data, tables, and databases may be stored in a recording medium and subjected to information processing. The CPU 2212 may execute various types of processing, which is described throughout the present disclosure and includes various types of operations designated by an instruction sequence of a program, information processing, condition determination, conditional branching, unconditional branching, information retrieval/replacement, and the like, on the data read from the RAM 2214 and writes back the results to the RAM 2214. Furthermore, the CPU 2212 may search for information in a file, a database, or the like in the recording medium. For example, when a plurality of entries each having the attribute value of a first attribute associated with the attribute value of a second attribute is stored in the recording medium, the CPU 2212 may search the plurality of entries for an entry matching a condition in which the attribute value of the first attribute is designated, read the attribute value of the second attribute stored in the entry, and thus acquire the attribute value of the second attribute associated with the first attribute satisfying a predetermined condition.

The programs or software modules described above may be stored in a computer-readable medium on the computer 2200 or near the computer 2200. Furthermore, a recording medium such as a hard disk or a RAM provided in a server system connected to a dedicated communication network or the Internet can be used as the computer-readable medium, thereby providing the program to the computer 2200 via the network.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10 CULTIVATION ASSISTANCE SYSTEM
100 SENSOR
110 TERMINAL
200 ASSISTANCE APPARATUS
210 ACQUISITION UNIT
212 ENVIRONMENTAL CONDITION ACQUISITION UNIT
214 PLANT DATA ACQUISITION UNIT
216 TROUBLE ACQUISITION UNIT
220 STORAGE UNIT
222 ENVIRONMENTAL CONDITION DATA
224 PLANT DATA
226 TROUBLE DATA
230 LEARNING UNIT
232 PREPROCESSING UNIT
234 EXTRACTION UNIT
236 MODEL GENERATION UNIT
238 MODEL
239 MODEL UPDATE UNIT
240 ESTIMATION UNIT
250 OUTPUT UNIT
300 DISPLAY APPARATUS
2200 COMPUTER
2201 DVD-ROM
2210 HOST CONTROLLER
2212 CPU
2214 RAM
2216 GRAPHIC CONTROLLER
2218 DISPLAY DEVICE
2220 INPUT/OUTPUT CONTROLLER
2222 COMMUNICATION INTERFACE
2224 HARD DISK DRIVE
2226 DVD-ROM DRIVE
2230 ROM
2240 INPUT/OUTPUT CHIP
2242 KEYBOARD

## Claims

1. A cultivation assistance system comprising:
a cultivation condition acquisition unit configured to acquire a cultivation condition under which a plant is cultivated;
a trouble acquisition unit configured to acquire a trouble occurrence situation in cultivation of the plant;
a model generation unit configured to generate, by using the cultivation condition and the trouble occurrence situation, a model for predicting one of a cultivation condition or a trouble from the other; and
an estimation unit configured to estimate, by using the model, a cultivation condition for suppressing occurrence of a trouble in cultivation of the plant.

2. The cultivation assistance system according to claim 1, comprising: a preprocessing unit configured to perform preprocessing on data of at least one of the cultivation condition or the trouble occurrence situation, wherein
the model generation unit is configured to generate, by using the preprocessed data, a model for predicting one of the cultivation condition or the trouble from the other.

3. The cultivation assistance system according to claim 2, wherein the preprocessing unit is configured to perform the preprocessing including at least one of associating the data of the cultivation condition with the data of the trouble occurrence situation on a time axis, complementing the data of the at least one of the cultivation condition or the trouble occurrence situation, processing an outlier of the data of the at least one of the cultivation condition or the trouble occurrence situation, or performing rounding processing of the data of the at least one of the cultivation condition or the trouble occurrence situation.

4. The cultivation assistance system according to any one of claims 1 to 3, comprising: an extraction unit configured to extract a feature amount of data of at least one of the cultivation condition or the trouble occurrence situation, wherein
the model generation unit is configured to generate the model based on the feature amount.

5. The cultivation assistance system according to claim 4, wherein the extraction unit is configured to extract, as the feature amount, at least one of an integrated value, a differential value, or data obtained by dissociating a daytime component and a nighttime component with respect to the data of the at least one of the cultivation condition or the trouble occurrence situation.

6. The cultivation assistance system according to any one of claims 1 to 5, wherein the model generation unit is configured to generate a model of a Bayesian network model structure.

7. The cultivation assistance system according to claim 6, wherein the model generation unit is configured to cluster data of at least one of the cultivation condition or the trouble occurrence situation and generate the model of the Bayesian network model structure.

8. The cultivation assistance system according to claim 6 or 7, wherein the model generation unit is configured to generate the model of the Bayesian network model structure having a node of data of at least one of the cultivation condition or the trouble occurrence situation.

9. The cultivation assistance system according to any one of claims 1 to 8, wherein the cultivation condition acquisition unit is configured to acquire, as the cultivation condition, plant data indicating an environmental condition under which the plant is cultivated and a state of the cultivated plant.

10. The cultivation assistance system according to any one of claims 1 to 9, comprising: an output unit configured to output data indicating the estimated cultivation condition to a display apparatus.

11. A cultivation assistance system comprising:
an estimation unit configured to estimate, by using a model for predicting one of a cultivation condition under which a plant is cultivated or a trouble in cultivation of the plant from the other, a cultivation condition for suppressing occurrence of a trouble in cultivation of the plant; and
an output unit configured to output data indicating the estimated cultivation condition.

12. The cultivation assistance system according to claim 11, comprising:
a cultivation condition acquisition unit configured to acquire the cultivation condition;
a trouble acquisition unit configured to acquire the trouble occurrence situation; and
a model update unit configured to update the model by using the cultivation condition and the trouble occurrence situation.

13. A cultivation assistance method comprising:
acquiring a cultivation condition under which a plant is cultivated;
acquiring a trouble occurrence situation in cultivation of the plant;
generating, by using the cultivation condition and the trouble occurrence situation, a model for predicting one of a cultivation condition or a trouble from the other; and
estimating a cultivation condition for suppressing occurrence of a trouble in cultivation of the plant by using the model.

14. A program for causing a computer to function as:
a cultivation condition acquisition unit configured to acquire a cultivation condition under which a plant is cultivated;
a trouble acquisition unit configured to acquire a trouble occurrence situation in cultivation of the plant;
a model generation unit configured to generate, by using the cultivation condition and the trouble occurrence situation, a model for predicting one of a cultivation condition or a trouble from the other; and
an estimation unit configured to estimate, by using the model, a cultivation condition for suppressing occurrence of a trouble in cultivation of the plant.

15. A recording medium having recorded thereon the program according to claim 14.
